# EUROPEAN PATENT APPLICATION

(11) **EP 2 312 389 A1**
(43) Date of publication of application: **20.04.2011**
(21) Application number: 10009409.3
(22) Date of filing: 09.09.2010
(51) Int. Cl.: G03B 15/02, G03B 15/03

(54) **A flash unit holder with adjustable position**

(30) Priority: 13.10.2009 CZ 200921808 U
(71) Applicant: Zyka, Dalibor, 373 16 Dobrá Voda u Ceskych Budejovic (CZ)
(72) Inventor: Zyka, Dalibor, 373 16 Dobrá Voda u Ceskych Budejovic (CZ)
(74) Representative: Sedlák, Jirí

(57) **Abstract**

A flash unit holder (1) with adjustable position consisting of a supporting bracket (6) to be mounted in the direction of the optical axis (3) of the camera lens (4) in front of the camera (5), further consisting of a shaped circular guide arranged at the end of the supporting bracket (6) and concentrically around the optical axis (3) of the camera lens (4), further consisting of a rotating cylinder shaped segment (12) arranged in a rotating fashion in respect to the shaped circular guide, the inner side of which is provided with conductive buses (15). The buses (15) are interconnected with the shoe (9) of the flash unit (2) on the outer side of the rotating cylinder shaped segment (12) and with the camera (5). The rotating flash adapter holder (1) finally consists of a locking element (18) for locking the rotating cylinder shaped segment (12) to the shoe (9) in a chosen position. The shaped guide and at the same time the element securing the interconnection of conductive buses (15) of the rotating cylinder shaped segment (12) with the camera (5) is made up by the fixed cylinder shaped segment (11) is fixed to the supporting bracket (6) and is arranged co-axially within the rotating cylinder shaped segment (12). The outer side of the fixed cylinder shaped segment (11) is provided with conductive buses (16) being arranged against the conductive buses (15) of the rotating cylinder shaped segment (12) and being by means of a cable (22) interconnected with the camera (5). The fixation of the rotating cylinder shaped segment (12) to the fixed cylinder shaped segment (11) allows for a rotating movement and locking by means of the locking element (18).

## Description

### Field of the disclosure

The subject matter of the invention is a flash unit holder with adjustable position allowing for a movement of an external flash adapter following a curved trajectory around the axis of the camera lens and allowing at the same time locking the flash adapter in a chosen point of this trajectory.

### Background and summary of the invention

There has been a need when taking photographs to arrange the flash adapter in relation to the photographed object so that its light shines on the object more from one side creating on the other side a shadowed surface, which causes the photograph to seem more plastic. This need has triggered the demand to change the position of the flash adapter in relation to the axis of the camera lens.

The Czech author's certificate no. 248 456 discloses a movable flash adapter holder made up by a clamping body connected with the camera housing. In the clamping body a movable bracket is placed turning in the vertical plane. At the end of the bracket there is a shoe for fixing the flash adapter. The bracket can be turned above the camera so that the flash adapter is placed above the vertical axis of the camera lens, or out of the camera, i.e. out of the vertical axis of the camera lens when the flash adapter moves in relation to the camera lens on a quadrantal trajectory in a radius equal to the length of the movable bracket. The disadvantage of this invention consists in the possibility of moving the flash adapter only on one side of the photographed object and only on a quadrantal trajectory.

WO 98/37454 teaches a telescoping movable flash adapter holder extending the flash unit above the camera. WO 87/00305 discloses a construction of an extendable bracket allowing the extension of the flash to the side, next to the camera. There are also known other extendable or foldable flashes such as those disclosed in EP 0 336 150 or in EP 0 308 625, nevertheless the brackets thereof are too short and they serve only to eliminate the "red eye effect".

On the market there are also movable flash holders made up by jib constructions provided with movable or by articulated brackets that can be locked by means of frictional and locking connections or by means of screw connections. These constructions allow for moving the flash in a sufficient distance from the camera lens axis and in any angle, but their disadvantage is their dimensions and their weight. Besides it is complicated and lengthy to set them in the right position.

Further a movable flash holder is disclosed in US 3 650 195 where the flash unit is mounted in the upper part of a fixed construction formed by an outer circle and is adjustable angularly. In the outer circle is retained a rotatable inner circle with a mountable bracket to mount the camera. The outer and the inner circles are provided with handles to turn mutually in relation to each other and by a screw securing the inner circle in a chosen position. In one of the handles the release operating the camera is built in. The rotation of the inner circle rotates the camera creating slant pictures on a rectangular film. The disadvantage of this apparatus lies in the fact that it is designed for mounting on a tripod and therefore practically immobile and the flash remains in relation to the photographed object in the same axial position.

Finally CZ 18428 discloses a movable flash holder formed by a shaped circular guide mounted to the camera lens by a supporting bracket. The shaped circular guide is formed by a fixed and by a movable circle. The fixed circle is formed by two parts, each being provided by a guiding recess to guide the movable circle provided with a shoe for the flash and teeth for locking the flash in any position on the periphery of the shaped guide. The movable circle formed by a cylinder segment is provided on its inner side by conductive buses on which elastic contacts connected via the cable with the camera sit. The disadvantage of this invention is that the locking element for mounting the flash on the shaped guide is very complicated to produce, is made up by two runners and the locking is carried out by expanding the spring. The locking element is not very reliable and its service life is rather short. The main disadvantage then lies in the fact that due to clearances and the wearing out the durability of the elastic contacts sitting on the conductive buses is short.

The object of the invention is to create such flash unit holder with adjustable position that would allow a shockless movement of the flash unit on the curved trajectory around the axis of the camera lens, allowing its locking in any position. The apparatus should be mobile, of small dimensions, light and easy to mount to the camera. It should especially dispose of greater reliability as for transmission of electric signals between the camera and the rotating shoe for the flash unit and it should further simplify the reliability of the locking element.

This object has been solved by creating a flash unit holder with adjustable position according to this invention. The subject matter of the invention consists in the fact that the shaped guide and at the same time the element securing the interconnection of conductive buses of the rotating cylinder shaped segment with the camera is made up by the fixed cylinder shaped segment being fixed to the supporting bracket. Thus any distance of the shaped guide from the camera lens can be adjusted. The fixed cylinder shaped segment is arranged co-axially within the rotating cylinder shaped segment; the outer side of the fixed cylinder shaped segment is provided with conductive buses being arranged against the conductive buses of the rotating cylinder shaped segment and being by means of a cable interconnected with the camera. Permanent communication between the buses is secured without being interrupted by the turning of the rotating cylinder shaped segment around the fixed cylinder shaped segment, which allows for an even transmission of the light from the flash unit. The fixation of the rotating cylinder shaped segment to the fixed cylinder shaped segment allows for a rotating movement and locking by means of the locking element.

In an advantageous embodiment the circumference of the rotating cylinder shaped segment is larger than the circumference of the fixed cylinder shaped segment; the rotating cylinder shaped segment is interrupted on its circumference and in the area of the interruption it is provided with a locking element to draw together the interrupted ends of the rotating cylinder shaped segment and to create a clamping connection between the rotating cylinder shaped segment and the fixed cylinder shaped segment. This interruption allows for rotating the rotating cylinder shaped segment on the circumference of the fixed cylinder shaped segment. The rotation is controlled by the locking element by means of which the position of the flash unit can be adjusted anywhere on the circumference of the fixed cylinder shaped segment.

In another advantageous embodiment the rotating cylinder shaped segment is provided by peripheral frames on both sides being interrupted in the same place as the rotating cylinder shaped segment the guiding circles arranged on the peripheries of the outer side of the fixed cylinder shaped segment snapping therein. The peripheral frames ensure compactness of the flash unit holder with adjustable position, they hold both cylinder shaped segments together and hinder them to shift backwards and forwards.

It is further advantageous that the rotating cylinder shaped segment is in the area of the interruption provided by a base in which the shoe as well as the locking element is arranged. The base is carried on the rotating cylinder shaped segment on the circumference of the fixed cylinder shaped segment. By means of the locking element the base can be locked in any place on the circumference of the fixed cylinder shaped segment. The flash unit is fixed in the shoe so that it is carried together with the base and is not fixed in one position.

In an advantageous embodiment the locking element is made up by a locking circle with a pin arranged eccentrically being fixed to one end of the interrupted rotating cylinder shaped segment, the locking element being further made up by a shaped hole in the locking circle; the pin fits in the shaped hole and the locking circle is fixed to the second end of the interrupted cylinder shaped segment. Turning of the locking circle increases or decreases the circumference of the rotating cylinder shaped segment. By decreasing the circumference the rotating cylinder shaped segment is locked in a certain position on the circumference of the fixed cylinder shaped segment.

Advantages of the flash unit holder with adjustable position according to the invention consist in the fact that this device is light, space saving and is easy to fix to the camera. It allows an even movement of the flash unit on the trajectory around the optical axis of the camera lens and allows a very simple locking of the flash unit in any angular position.

Another advantage of the invention consists in the fact that the flash unit can always be in the position of upper lighting and the camera can be freely turned, according to the composition intention of the photographer, for example when creating inclined or half turned images, applied frequently in advertising photography. Mobility and the possibility to change the position of the flash unit in very short time periods is a great advantage of the present invention, compared to known adjustable holders in which the change of position of the flash unit has to be carried out by loosening butterfly nuts and composing a construction of several brackets. Thanks to the possibility of rotating the flash unit by 360° the holder can be used by both left and right handed photographers without limitation when holding the camera and pressing the release button in an unnatural position.

### Brief description of the drawings

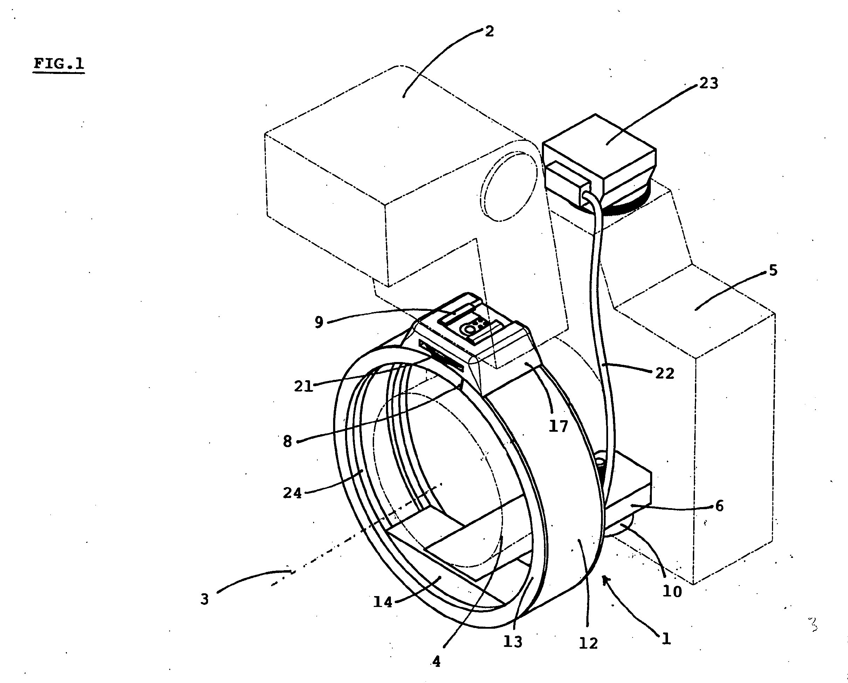

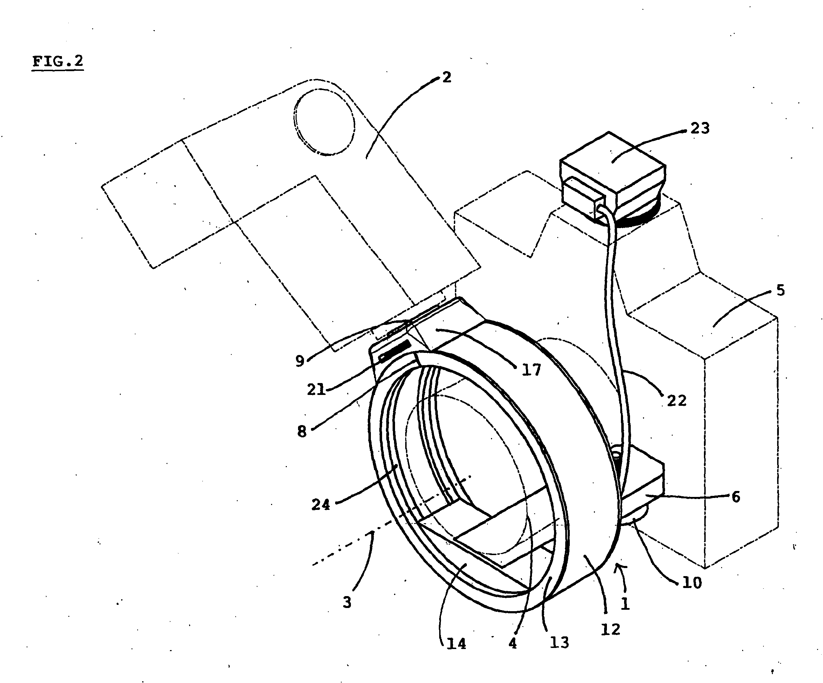

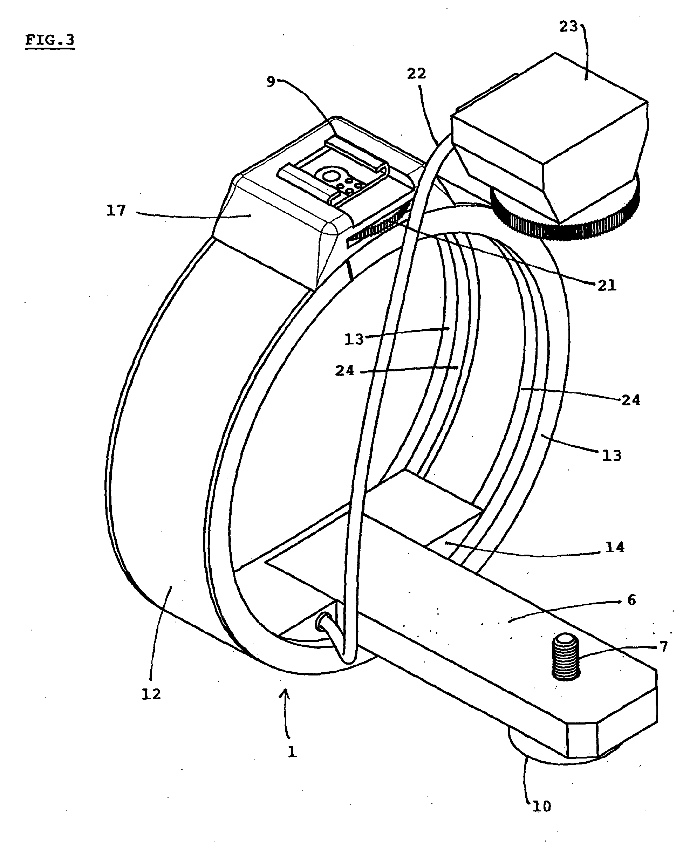

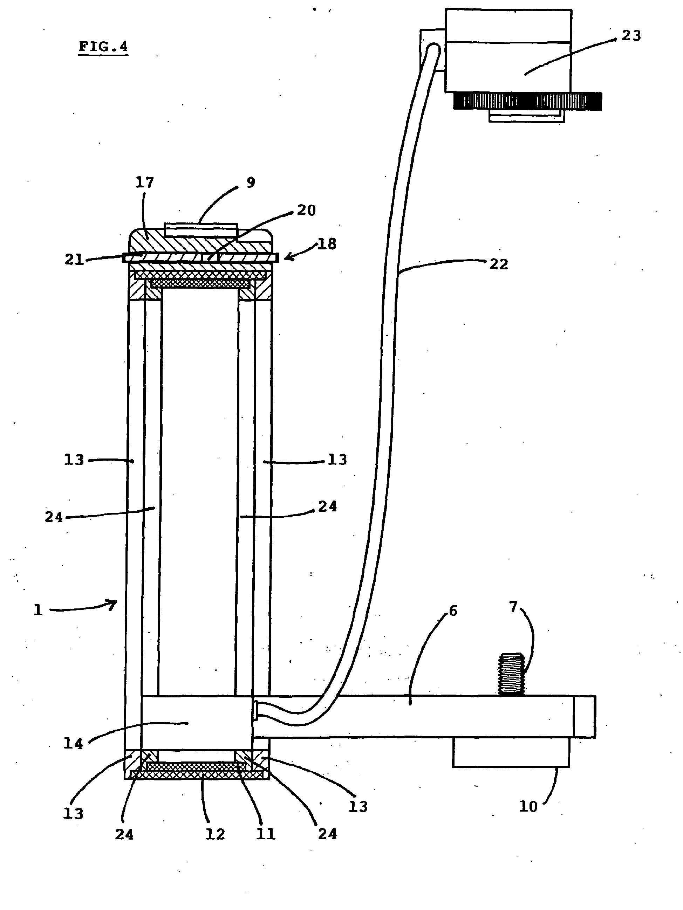

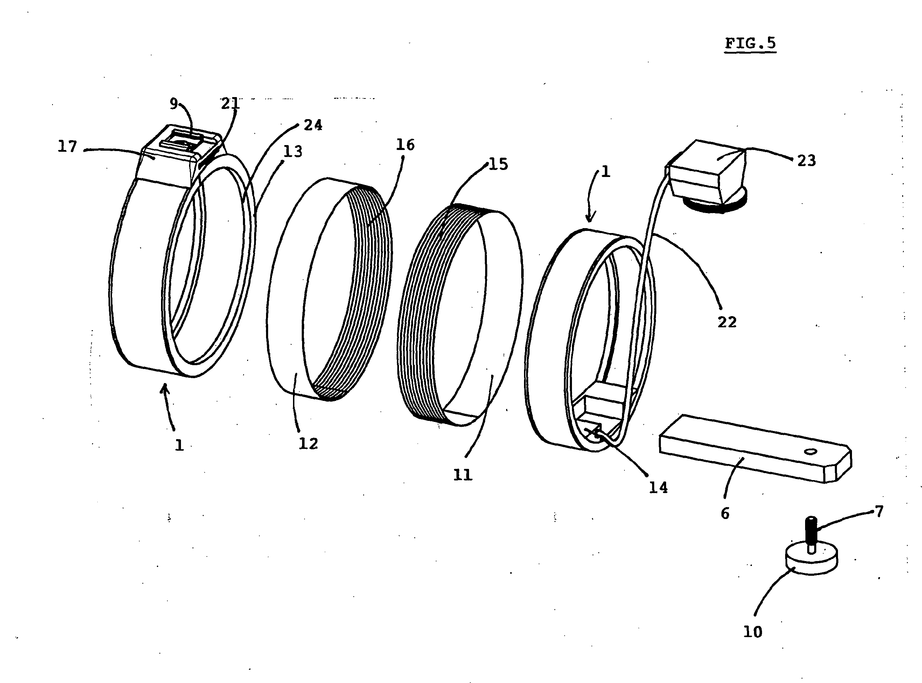

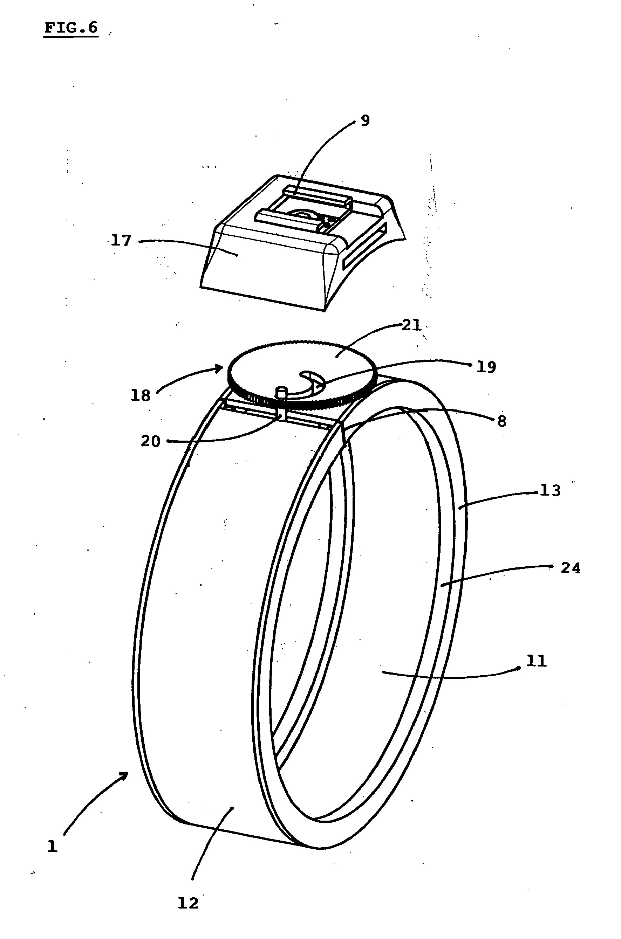

The invention will be more closely described with respect to drawings in which fig. 1 shows a perspective front view of the holder with adjustable position mounted to the camera, the flash unit being in the upper position, fig. 2 shows the same view as fig. 1 but the flash unit is turned to a side position, fig. 3 shows a perspective back view on the holder with adjustable position itself, fig. 4 shows a vertical section of the holder with adjustable position, fig. 5 shows a perspective view on opened set of parts of the holder with adjustable position and fig. 6 shows a detail of the base and of the locking element.

### Detailed description of the preferred embodiments

It is understood that specific examples of realization of the invention, as described and depicted below, are provided only as an illustration and that they in no way limit realization of the invention to such examples. Experts proficient in the state of the art will find and will be able to identify through routine experimenting one or more equivalents of the realizations of the invention as specifically described herein. Such equivalents shall be covered by the scope of patent claims contained herein.

Figures 1 to 6 show a particular embodiment of the flash unit holder with adjustable position 1 according to the invention where the shaped guide is a circle. However, the embodiments of the invention are not limited to this shape only.

A supporting bracket 6 made up by a plastic matter profile is fastened to the camera 5 by means of a screw 7.The opposite end of the supporting bracket 6 is inserted in the insert 14 fixed within the shaped circular guide. The insert 14 is by means of a cable 22 and a connector 23 connected to the electric output of the camera 5 operating the flash unit 2.The electric conductors of the cable 22 are interconnected in the insert 14 with the conductive buses 15, 16 from which they conduct signals to the connector 23.

The shaped circular guide consists of a fixed cylinder shaped segment 11 made from plastic matter, the circumference of which is formed by guiding circles 24 touching by their outer circumferences the inner circumferences of the peripheral frame 13 of the rotating cylinder shaped segment 12. The peripheral frame 13 and the guiding circles 24 are made from plastic matter and they secure the rotating movement of the rotating cylinder shaped segment 12 hindering its shifting backwards and forwards from the fixed cylinder shaped segment 11.

The rotating cylinder shaped segment 12 is interrupted on its circumference as well as the peripheral frame 13. The interruption of the rotating cylinder shaped segment 12 same as the interruption of the peripheral frame 13 can be narrowed or widened as needed. In principle, it is the extent of the interruption that allows for the rotation of the rotating cylinder shaped segment 12 around the fixed cylinder shaped segment 11.

The outer circumference of the fixed cylinder shaped segment 11 is provided by a gold-coated conductive bus 15 while in the rotating cylinder shaped segment 12 it is the inner circumference that is provided by the gold-coated conductive bus 16. The permanent contact of the conductive buses 15, 16 in any position of the rotating cylinder shaped segment 12 is thus secured.

The rotating cylinder shaped segment 12 rotates around the optical axis 3 of the camera lens 4 and carries the flash adapter shoe 9. A locking element 18 is arranged on the rotating cylinder shaped segment 12 to allow the flash unit 2 in a chosen angular position in relation to the camera lens 4. The locking element 18 is arranged on one end of the interrupted circumference and the opposite end of the interrupted circumference is inserted under the locking element 18.

The locking element 18 is made up by a shaped hole 19 cut in the locking circle 21 arranged in the base 17 of the shoe 9 and by a pin 20 placed on the rotating cylinder shaped segment 12. The rotating cylinder shaped segment 12 as well as its conductive bus 16 and the peripheral frame 13 is interrupted and open in the area of the base 17 for the shoe 9. The rate of the opening or locking of the rotating cylinder shaped segment 12, peripheral frame 13 and conductive bus 16 is regulated by the locking circle 21 provided by the shaped hole 19 in which the pin 20 is placed in a fixed connection to the rotating cylinder shaped segment 12. When the locking circle 21 is turned, the pin 20 moves in the shaped hole 19 and it draws or releases the rotating cylinder shaped segment 12 in relation to the fixed cylinder shaped segment 11.

### Industrial applicability

The flash unit holder with adjustable position according to the invention can be applied when taking photographs when the flash adapter needs to be set from a certain side of the camera lens in relation to the photographed object in order to create a more plastic image in the photograph.

### Overview of relation figures used in the drawings

- 1: flash unit holder with adjustable position
- 2: flash unit
- 3: optical axis of the camera lens
- 4: camera lens
- 5: camera
- 6: supporting bracket
- 7: screw
- 8: rotating cylinder shaped segment interruption
- 9: flash adapter shoe
- 10: screw head
- 11: fixed cylinder shaped segment
- 12: rotating cylinder shaped segment
- 13: peripheral frame
- 14: insert
- 15: conductive bus of the fixed cylinder shaped segment
- 16: conductive bus of the rotating cylinder shaped segment
- 17: base
- 18: locking element
- 19: shaped hole
- 20: pin
- 21: locking circle
- 22: cable
- 23: connector
- 24: guiding circle

## Claims

1. A flash unit holder (1) with adjustable position consisting of a supporting bracket (6) to be mounted in the direction of the optical axis (3) of the camera lens (4) in front of the camera (5), further consisting of a shaped circular guide arranged at the end of the supporting bracket (6) and concentrically around the optical axis (3) of the camera lens (4), further consisting of a rotating cylinder shaped segment (12) arranged in a rotating fashion in respect to the shaped circular guide, the inner side of which is provided with conductive buses (15); these buses (15) being interconnected with the shoe (9) of the flash unit (2) on the outer side of the rotating cylinder shaped segment (12) and with the camera (5); the rotating flash adapter holder (1) finally consisting of a locking element (18) for locking the rotating cylinder shaped segment (12) to the shoe (9) in a chosen position, **characterized by that** the shaped guide and at the same time the element securing the interconnection of conductive buses (15) of the rotating cylinder shaped segment (12) with the camera (5) is made up by the fixed cylinder shaped segment (11) being fixed to the supporting bracket (6) and being arranged co-axially within the rotating cylinder shaped segment (12); the outer side of the fixed cylinder shaped segment (11) is provided with conductive buses (16) being arranged against the conductive buses (15) of the rotating cylinder shaped segment (12) and being by means of a cable (22) interconnected with the camera (5); the fixation of the rotating cylinder shaped segment (12) to the fixed cylinder shaped segment (11) allows for a rotating movement and locking by means of the locking element (18).

2. The flash unit holder with adjustable position according to claim 1 **characterized by that** the circumference of the rotating cylinder shaped segment (12) is larger than the circumference of the fixed cylinder shaped segment (11); the rotating cylinder shaped segment (12) is interrupted on its circumference and in the area of the interruption (8) it is provided with a locking element (18) to draw together the interrupted ends of the rotating cylinder shaped segment (12) and to create a clamping connection between the rotating cylinder shaped segment (12) and the fixed cylinder shaped segment (11).

3. The flash unit holder with adjustable position according to claim 2 **characterized by that** the rotating cylinder shaped segment (12) is provided by peripheral frames (13) on both sides being interrupted in the same place as the rotating cylinder shaped segment (12) the guiding circles (24) arranged on the peripheries of the outer side of the fixed cylinder shaped segment (11) snapping therein.

4. The flash unit holder with adjustable position according to claim 2 or 3 **characterized by that** the rotating cylinder shaped segment (12) is in the area of the interruption (8) provided by a base (17) in which the shoe (9) as well as the locking element (18) is arranged.

5. The flash unit holder with adjustable position according to claim 3 or 4 **characterized by that** the locking element (18) is made up by a locking circle (21) with a pin (20) arranged eccentrically being fixed to one end of the interrupted rotating cylinder shaped segment (12), the locking element being further made up by shaped hole (19) in the locking circle (21); the pin (20) fits in the shaped hole (19) and the locking circle (21) is fixed to the second end of the interrupted cylinder shaped segment (12).
